## Europäisches Patentamt

## European Patent Office

## Office européen des brevets

(11) Veröffentlichungsnummer: **0 017 904**
**B1**

(12) **EUROPÄISCHE PATENTSCHRIFT**

(45) Veröffentlichungstag der Patentschrift:
**10.11.82**

(21) Anmeldenummer: **80101886.2**

(22) Anmeldetag: **09.04.80**

(51) Int. Cl.³: **G 03 B 27/50**, G 03 B 15/04,
G 03 B 21/11, G 03 B 21/134

(54) **Projektionskopiergerät.**

(30) Priorität: **17.04.79 DE 2915512**

(43) Veröffentlichungstag der Anmeldung:
**29.10.80 Patentblatt 80/22**

(45) Bekanntmachung des Hinweises auf die Patenterteilung:
**10.11.82 Patentblatt 82/45**

(84) Benannte Vertragsstaaten:
**BE CH FR GB IT LI NL SE**

(56) Entgegenhaltungen:
**DE-A-2 140 734**
**DE-A-2 840 722**
**US-A-3 663 101**
**US-A-3 869 204**
**Patents Abstracts of Japan Band 2, Nr. 19, 8. Februar 1978, Seite 11183 E 77**

(73) Patentinhaber: **AGFA-GEVAERT Aktiengesellschaft,
D-5090 Leverkusen 1 (DE)**

(72) Erfinder: **Freitag, Friedbert, Willmannstrasse 26,
D-8025 Unterhaching (DE)**
Erfinder: **Gutmann, Walter, Kleefeldstrasse 12,
D-8021 Lochhofen (DE)**
Erfinder: **Hofmann, Wilfried, Am Heimgarten 57,
D-8021 Taufkirchen (DE)**
Erfinder: **Liermann, Traugott, Bussardstrasse 44,
D-8025 Unterhaching (DE)**

ACTORUM AG

Projektionskopiergerät

Die Erfindung betrifft ein Projektionskopiergerät gemäss dem Gattungsbegriff des Patentanspruches.

Ein mit einem schwenkbaren Winkelspiegel ausgestattetes Kopiergerät zur optischen Abtastung einer ruhenden Vorlage ist in der DE-A1 Nr. 2 140 734 gezeigt. Solche Kopiergeräte haben aufgrund des zur Abtastung der Vorlage dienenden Winkelspiegels in Verbindung mit der Schwenkbarkeit dieses Spiegels gegenüber anderen bekannten Geräten zur optischen Abtastung einer ruhenden Vorlage den Vorteil einer besonders kompakten Bauweise. Andere bekannte Geräte sind z.B. ein mit einem rotierenden Einzelspiegel ausgestattetes Gerät gemäss der US-A Nr. 3 663 101 oder die durch die US-A Nr. 3 869 204 und die JP-A Nr. 52 137 377 bekannt gewordenen Geräte, bei welchen die Vorlage mittels eines nicht schwenkbaren Winkelspiegels abgetastet wird.

Bei einem weiteren derartigen, als Mikrofilm-Kopiergerät dienenden Gerät gemäss der DE-A1 Nr. 2 840 722 ist ein in raumsparender Weise zwischen den Winkelspiegeln angeordneter, schwenkbarer Umlenkspiegel vorgesehen, welcher den Projektionsstrahlengang wahlweise unter Zwischenschaltung weiterer optischer Bauelemente auf einen Projektionsschirm lenkt.

Es ist das Ziel der vorliegenden Erfindung, eine raumsparende, mit einem schwenkbaren Winkelspiegel ausgestattete Projektionskopieranordnung so weiterzubilden, dass trotz der gedrängten Bauweise während des Kopiervorganges kein Überstrahlen des durch den Projektionsschirm eindringenden Lichtes aus dem Geräteoberteil in das Geräteunterteil eintritt. Erfindungsgemäss wird dies durch die im Kennzeichen des Patentanspruches angegebenen Merkmale erreicht.

In der Zeichnung ist ein Ausführungsbeispiel der Erfindung dargestellt. Dabei zeigt

Fig. 1 eine schematische Darstellung eines erfindungsgemässen Projektionskopiergerätes mit einem verschieblichen Winkelspiegel,

Fig. 2 ein Mikrofilm-Lese- und Kopiergerät in halbschematischer Darstellung, und

Fig. 3 und 4 jeweils einen Ausschnitt aus einem Lese-Kopiergerät gemäss Fig. 2 in halbschematischer Darstellung in verschiedenen Kopier- und Betriebszuständen.

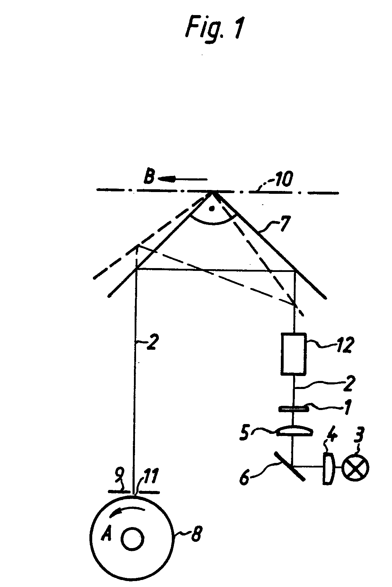

In Fig. 1 ist mit der Bezugsziffer 1 ein Mikrobildträger bezeichnet. Dieser Mikrobildträger kann beispielsweise von einem Mikrofilmstreifen oder von einem Mikrofiche gebildet werden und von Hand oder motorisch in bekannter Weise relativ zu einem Abbildungsstrahlengang 2 positioniert werden. Das ausgewählte, zu projizierende Mikrobild wird über eine Beleuchtungseinrichtung, die eine Beleuchtungslampe 3, Kondensorlinsen 4 und 5 und einen Umlenkspiegel 6 umfasst, beleuchtet. Ein Abbildungsobjektiv 12 projiziert das Mikrobild über einen Winkelspiegel 7, dessen beide Spiegelflächen zueinander unter einem rechten Winkel stehen, auf eine in Pfeilrichtung A umlaufende fotosensible Kopiertrommel 8. Eine Feldblende 9 bewirkt, dass jeweils nur ein spaltförmiger Bereich des abgetasteten Bildes auf die Trommel 8 projiziert wird.

Zum Abtasten des Bildes wird der Winkelspiegel 7 bei rotierender Trommel 8 entlang der Verschiebebahn 10, die parallel zur Ebene des Mikrobildes 1 und zur Tangentialfläche der Kopiertrommel in dem durch die Feldblende 9 definierten Belichtungsbereich 11 ist, in Pfeilrichtung B verschoben. Die Verschiebegeschwindigkeit des Winkelspiegels 7 ist hierbei halb so gross wie die Bahngeschwindigkeit der fotosensiblen Oberfläche der Kopiertrommel 8. Durch Verschiebung des Winkelspiegels synchron zur Kopiertrommel zwischen zwei Endstellungen wird der gesamte zu übertragende Bildbereich abgetastet und streifenweise auf die Kopiertrommel 8 aufbelichtet.

Wie durch die gestrichelt eingezeichnete Position des Winkelspiegels 7, in der er um die mit der Schnittlinie der beiden Spiegelflächen des Winkelspiegels zusammenfallenden Achse verschwenkt ist, gezeigt ist, wird der Projektionsstrahlengang 2 durch Verschwenken des Spiegels nicht beeinflusst. Sowohl die Gesamtlänge als auch die Position des zweifach reflektierten Projektionsstrahlenganges bleiben unverändert.

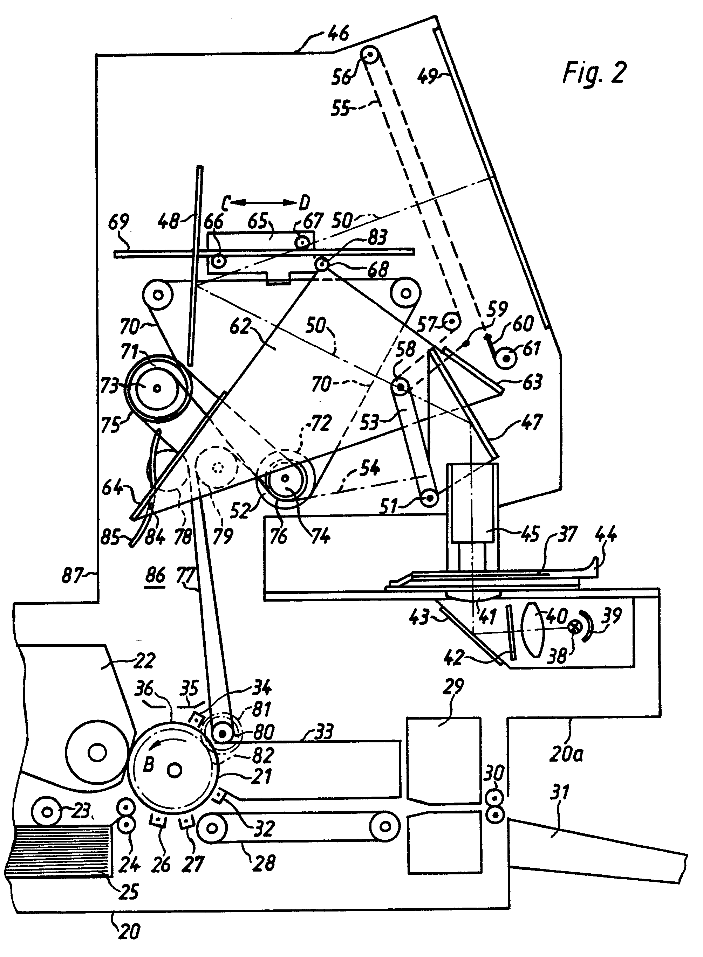

In Fig. 2 ist im unteren Gehäuseteil 20 eines Mikrofilm-Lese-Kopiergerätes die Kopiereinheit untergebracht. Diese Kopiereinheit umfasst eine fotosensible Kopiertrommel 21, um die herum die üblichen Bearbeitungsstationen eines elektrofotografischen Kopiergerätes angeordnet sind. Das auf der Kopiertrommel befindliche elektrostatische Ladungsbild wird in einer Entwicklungseinrichtung 22 entwickelt. Über einen Rollenanleger 23 werden im Kopiertakt einzelne Kopieträger eines Blattstapels 25 über ein Einzugswalzenpaar 24 an den Umfang der Kopiertrommel 21 herangeführt. Im Bereich eines Übertragungscorotrons 26 wird das in der Entwicklungseinrichtung 22 durch Toner eingefärbte Ladungsbild auf den Kopieträger übertragen. Ein Abnahmecorotron 27 erleichtert das Abnehmen des Kopieträgers von der Trommel 21, von der der Kopieträger, der nun das Pulverbild trägt, über ein Transportband 28 von der Kopiertrommel 21 weg zu einer Fixiereinrichtung 29, in der das Pulverbild auf dem Kopieträger eingeschmolzen wird, transportiert wird. Von hier aus wird er über ein Auslaufwalzenpaar 30 in ein Ablagefach 31 abgelegt. In Umlaufrichtung B der Kopiertrommel 21 gesehen hinter dem Abnahmecorotron 27 ist am Umfang der Kopiertrommel ein Reinigungscorotron 32 und im Anschluss daran eine Reinigungseinrichtung 33 zum Reinigen der Kopiertrommeloberfläche von Resttoner vorgesehen. Im Anschluss an die Reinigungseinrichtung 33 befindet sich ein Aufladecorotron 34, das die Kopiertrommeloberfläche gleichmässig mit elektrischer Ladung belegt. Durch eine Feldblende 35 wird ein parallel zur Kopiertrommelachse verlaufender, spaltförmiger Belichtungsbereich 36 definiert.

In einem dem Gerätebenutzer zugewandten pultartigen Gehäuseteil 20a des unteren Gehäuseteils 20 ist eine Beleuchtungseinrichtung für den zu projizierenden Ausschnitt eines Mikrofiches 37 untergebracht. Die Beleuchtungseinrichtung umfasst eine Beleuchtungslampe 38, einen Reflektor 39, Kondensorlinsen 40 und 41, ein Wärmeschutzglas 42 sowie einen Umlenkspiegel 43. Auf der Oberseite des pultartigen Gehäuseteils 20a ist eine Mikrofichebühne 44, auf der zwischen zwei transparenten Platten das Mikrofiche 37 gehalten wird, in bekannter Weise in zwei Koordinatenrichtungen verschieblich gelagert. Ein überhalb der Mikrofichebühne angeordnetes, vorzugsweise in bekannter Weise schwimmend gelagertes Abbildungsobjektiv 45 projiziert das abzubildende Mikrobild über im Inneren eines oberen Gehäuseteils 46 angeordnete Umlenkspiegel 47, 48 auf eine dem Gerätebenutzer zugewandte Projektionsfläche 49, auf der ein vergrössertes Bild des Mikrobildes entsteht. Der Verlauf des Projektionsstrahlenganges zum Betrachten des Mikrobildes ist durch die mit der Bezugsziffer 50 bezeichnete strichpunktierte Linie angedeutet.

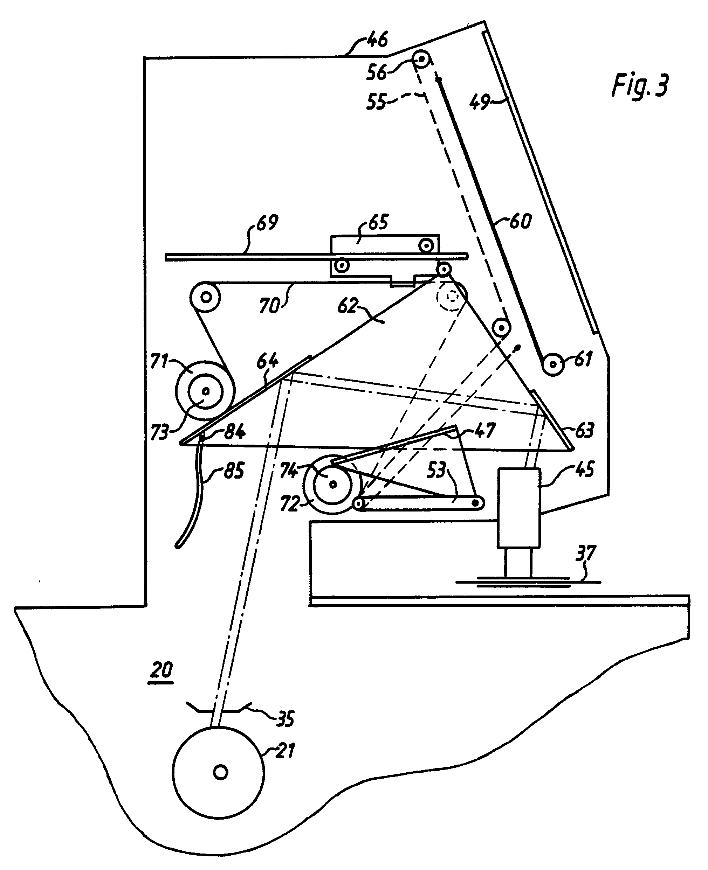

Der Umlenkspiegel 47 ist um die Achse 51 schwenkbar gelagert und ist über einen zwischen einem umlaufenden Rad 52 und einem mit dem Spiegel drehfest verbundenen Schwenkhebel 53 wirkenden Kurbelantrieb 54 zwischen zwei Endstellungen, von denen eine in Fig. 2 und die andere in Fig. 3 dargestellt ist, verschwenkbar. Ein Seilzug 55 ist über Umlenkrollen 56, 57 und 58 gespannt, wobei die Umlenkrolle 58 am freien Ende des Schwenkhebels 53 gelagert ist. Das eine Ende des Seilzugs 55 ist bei 59 am Gerätegehäuse befestigt, das andere Ende ist an einem aufrollbaren Vorhang 60 befestigt, der unter Federwirkung auf einer Aufwickeltrommel 61 aufgewickelt ist.

Auf einem im oberen Gehäuseteil 46 untergebrachten Winkelspiegelträger 62 sind zwei Spiegel 63, 64 im rechten Winkel zueinander angeordnet. Der Winkelspiegelträger 62 ist auf einem Transportschlitten 65 gelagert, der seinerseits über Rollen 66 bis 68 an Führungsstangen 69 in einer zur Ebene des Mikrofiches 37 parallelen Ebene in Pfeilrichtung C-D verschieblich geführt ist. Die Verschiebung des Transportschlittens 65 erfolgt über am Transportschlitten befestigte Transportbänder 70, deren eine Enden auf Trommeln 71 und deren andere Enden auf Trommeln 72 aufrollbar sind. Die Trommeln 71 und 72 sind über Magnetkupplungen 73 und 74 mit Antriebsrädern 75 bzw. 76 kuppelbar. Die Antriebsräder 75, 76 werden durch einen Zahnriemen 77, der über die Antriebsräder 75 und 76 sowie über Umlenk- bzw. Spannrollen 78, 79 und ein Zahnriemenrad 80 gespannt ist, angetrieben. Das Zahnriemenrad 80 ist auf einer gemeinsamen Welle drehfest mit einem Zahnrad 81 verbunden, welches seinerseits mit einem mit der Kopiertrommel 21 umlaufenden Zahnrad 82 kämmt.

Der Winkelspiegelträger 62 ist am Transportschlitten 65 um eine Achse 83, die mit der Schnittlinie der beiden Ebenen der Spiegel 63 und 64 zusammenfällt, verschwenkbar. Zusätzlich ist der Winkelspiegelträger über an den beiden Seitenflächen des Spiegelträgers 62 angebrachte Führungsstifte 84 in mit den Führungsstiften zusammenwirkenden Führungsschlitzen 85 geführt.

Die Wirkungsweise des vorstehend beschriebenen Gerätes ist nun folgende: Aufgrund der auf den Seilzug 55 wirkenden Aufrollkraft des Vorhangs 60 wird der Spiegel 47 in der in Fig. 2 dargestellten Leseposition gehalten. Der Winkelspiegelträger 62 befindet sich in der in Fig. 2 dargestellten Leseposition. Der Vorhang 60 ist geöffnet. Das über die Bühne 44 relativ zum Abbildungsstrahlengang 50 positionierte Mikrobild wird in üblicher Weise auf die Projektionsfläche 49 zum Betrachten des Mikrobildes projiziert. Der Winkelspiegelträger 62 ist in seinem oberen Bereich offen, so dass er der Projektion des Bildes nicht im Wege steht.

Soll nun das im Projektionsstrahlengang befindliche Bild kopiert werden, so wird über eine nicht dargestellte Taste die Kopiereinheit in Betrieb gesetzt. Hierdurch wird die Kopiertrommel 21 in Rotation versetzt und der Zahnriemen 77 und somit auch die Trommel 76 angetrieben. Hierdurch wird über den Kurbelantrieb 54 der Schwenkhebel 53 und somit auch der Spiegel 47 nach unten in die in Fig. 3 dargestellte Position verschwenkt, wodurch gleichzeitig der Seilzug 55 nach unten gezogen und somit der Vorhang 60 geschlossen wird. Das Geräteinnere ist nun lichtdicht abgeschlossen.

Gleichzeitig mit der Inbetriebnahme des Kopiergerätes wird die Magnetkupplung 74 betätigt, und zwar solange, bis durch Aufspulen des Transportbandes 70 auf die Trommel 72 der Transportschlitten 65 in seine in Fig. 3 dargestellte rechte Ausgangsposition gebracht ist.

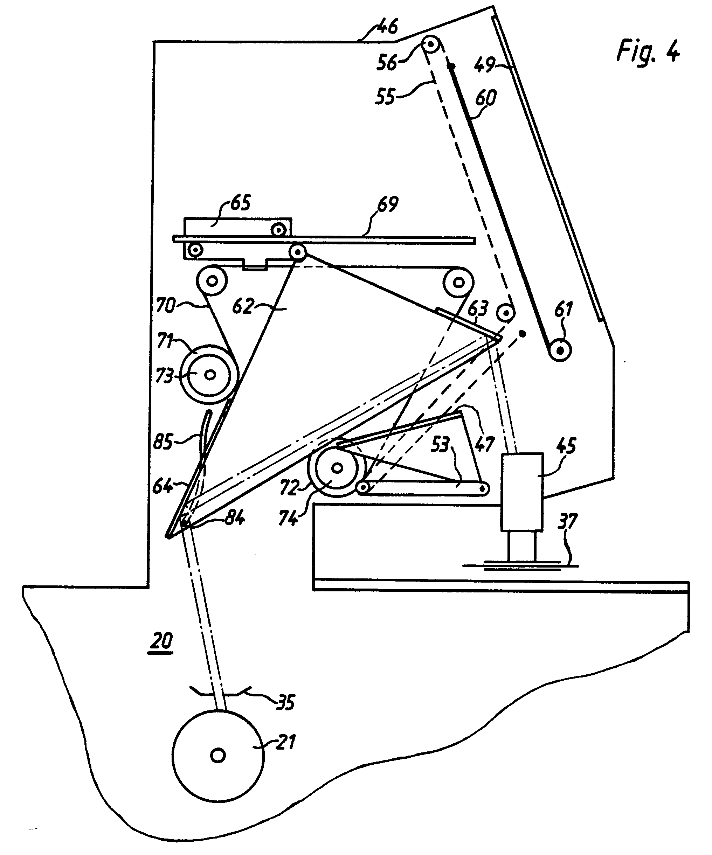

Nun wird die Magnetkupplung 74 freigegeben und die Magnetkupplung 73 betätigt, so dass das Transportband 70 auf der Trommel 71 aufgespult und der Transportschlitten 65 mit konstanter Geschwindigkeit in Pfeilrichtung C bis zu der in Fig. 4 dargestellten Endposition verschoben wird.

Durch Verschieben des Winkelspiegels von der in Fig. 3 dargestellten Position in die in Fig. 4 dargestellte Position wird das zu kopierende Mikrobild unter zweifacher Umlenkung des Abbildungsstrahlenganges an den Spiegeln 63 und 64 durch den das obere Gerätegehäuse 46 und das untere Gerätegehäuse 20 verbindenden Sockel 87, der einen Lichtschacht 86 einschliesst, streifenweise auf die umlaufende Kopiertrommel 21 übertragen.

Die Transportgeschwindigkeit des Transportschlittens 65 während des Kopiervorganges ist halb so gross wie die Bahngeschwindigkeit der Oberfläche der Kopiertrommel 21. Zusätzlich zu seiner Verschiebebewegung in Pfeilrichtung C-D wird der Winkelspiegelträger 62 über die durch den Führungsstift 84 und den Führungsschlitz 85 gebildete Führungseinrichtung verschwenkt, so dass der Platzbedarf des Winkelspiegelträgers minimal gehalten werden kann.

Sobald der Kopiervorgang beendet ist, wird durch Betätigen der Magnetkupr ing 74 anstelle der Magnetkupplung 73 der Winkelspiegelträger 62 wieder in seine in Fig. 2 rgestellte Ausgangsposition zurückgeführt. Gleichzeitig wird der Schwenkhebel 53 freigegeben, so dass aufgrund der Zugkraft des Aufrollmechanismus des Vorhangs 60 dieser wieder geöffnet und der Spiegel 47 in seine Ausgangsposition zurückverschwenkt wird.

## Patentanspruch

Projektionskopiergerät, bei dem eine während des Abtastvorganges relativ zu einem Gerätegehäuse ruhende Vorlage streifenweise optisch abgetastet und auf einen während des Abbildungsvorganges an einem ortsfesten Belichtungsbereich vorbeibewegten Bildträger projiziert wird, mit einem schwenkbaren Winkelspiegel (62-64), dessen Spiegelebenen miteinander einen rechten Winkel bilden, und der die Mittelachse des Projektionsstrahlenganges (50) zwischen dem während des Abtastvorganges ebenfalls relativ zum Gerätegehäuse ruhenden Abbildungsobjektiv (45) und dem Bildträger zweimal umlenkt und der zum Abtasten der Vorlage (37) mittels einer synchron mit der Bewegung des Bildträgers (37) arbeitenden Antriebsvorrichtung quer zum Projektionsstrahlengang verschiebbar ist, wobei die Verschiebegeschwindigkeit der mit der Schnittlinie seiner beiden Spiegelebenen zusammenfallenden Schwenkachse (83) halb so gross ist wie die Bahngeschwindigkeit des Bildträgers, dadurch gekennzeichnet, dass zwischen den beiden Spiegelflächen (63, 64) ein in seiner Kopierstellung etwa in der Ebene der achsfernen Spiegelkanten liegender, in seiner Projektionsstellung in den Projektionsstrahlengang (50) einschwenkbarer Umlenkspiegel (47) angeordnet ist, der den Projektionsstrahlengang wahlweise auf einen Projektionsschirm (49) lenkt, dass das Gerätegehäuse einen oberen und einen unteren Gehäuseteil (20) umfasst, dass der Winkelspiegel (62-64) im oberen Gehäuseteil (46) untergebracht ist und den Projektionsstrahlengang beim Kopiervorgang durch einen den oberen und den unteren Gehäuseteil verbindenden Schacht (86) in den unteren Gehäuseteil (20) auf den Bildträger (21) lenkt, und dass der Umlenkspiegel (47) antriebsmässig mit einem das Innere des oberen Gehäuseteiles (46) beim Kopiervorgang gegen das Umgebungslicht abschirmenden Vorhang (60) verbunden ist.

## Claim

Projection copying apparatus in which an original, which during the scanning operation is stationary relative to an apparatus housing, is optically scanned stripwise and is projected onto an image support which during the image-forming operation is moved past a fixed exposure region, the apparatus having a pivotable corner reflector (62-64) of which the mirror planes together form a right angle an which twice deflects the central axis of the projection beam (5 between the image-forming lens (45), whiun during the scanning operation is likewise stationary relative to the apparatus housing, and the image support and which in order to scan the original (37) can be displaced transversely with respect to the projection beam by means of a drive device that operates in synchrony with the movement of the image support (37), the rate of displacement of the pivot axis (83) coincident with the line of intersection of its two mirror planes being half as great as the velocity of the image support along its path, characterized in that between the two mirror surfaces (63, 64) there is arranged a deflecting mirror (47) which in its copying position lies approximately in the plane of the mirror edges remote from the axis and in its projection position can be swivelled into the projection beam (50), and which deflects the projection beam selectively onto a projection screen (49), that the apparatus housing includes an upper housing portion and a lower housing portion (20), that the corner reflector (62-64) is housed in the upper housing portion (46) and during the copying operation deflects the projection beam through a shaft (86), which connects the upper and the lower portions of the housing, into the lower housing portion (20) and onto the image support (21), and that the deflecting mirror (47) is in driving connection with a blind (60) that during the copying operation screens the interior of the upper housing portion (46) from ambient light.

## Revendication

Photocopieur par projection, dans lequel un original, immobile par rapport à l'enveloppe du photocopieur pendant le balayage, est balayé optiquement par bandes successives et, pendant la reproduction, est projeté sur un support d'images déplacé devant une région d'exposition fixe, comprenant un miroir coudé (62 à 64), dont les plans réfléchissants forment entre eux un angle droit et qui dévie deux fois l'axe médian du faisceau (50) de projection entre l'objectif (45) de reproduction, également immobile par rapport à l'enveloppe du photocopieur pendant le balayage, et le suppport d'images et qui, pour balayer l'original (37), est déplaçable en translation perpendiculairement au trajet du faisceau de projection à l'aide d'un dispositif d'entraînement fonctionnant en synchronisme avec le déplacement du support (37) d'images, la vitesse de déplacement en translation de l'axe (83) de pivotement coïncidant avec la ligne d'intersection de ses deux plans réfléchissants étant égale à la moitié de la vitesse périphérique du support d'images, caractérisé en ce que, entre les deux plans réfléchissants (63, 64), est interposé un miroir de déviation (47), qui se trouve en sa position de reproduction sensiblement dans le plan des bords du miroir éloignés de l'axe, qui peut pivoter pour venir en sa position de projection dans le trajet (50) du faisceau de projection et qui dévie le faisceau de projection, au choix sur un écran (49) de projection, en ce que l'enveloppe du photocopieur comprend une partie supérieure et une partie (20) inférieure, en ce que le miroir coudé (62 à 64) est logé dans la partie (46) supérieure de l'enveloppe et, lors de la reproduction, dévie le faisceau de projection dans la partie (20) inférieure de l'enveloppe sur le support (21) d'images par une cheminée (86) reliant la partie supérieure et la partie inférieure, et en ce que le miroir de déviation (47) est relié avec entraînement à un rideau (60) mettant, lors du copiage, l'intérieur de la partie (46) supérieure de l'enveloppe à l'abri de la lumière ambiante.

# Fig. 1

Fig. 2

Fig.3

Fig. 4